# EUROPEAN PATENT APPLICATION

(11) **EP 3 926 203 A1**
(43) Date of publication of application: **22.12.2021**
(21) Application number: 20181268.2
(22) Date of filing: 19.06.2020
(51) Int. Cl.: F16F 9/05

(54) **AIR SPRING**

(71) Applicant: ContiTech AG, 30165 Hannover (DE)
(72) Inventor: Janhar, Ziga - c/o Continental AG, 30419 Hannover (DE); Heberle, Peter - c/o Continental AG, 30419 Hannover (DE); Kosir, Matej - c/o Continental AG, 30419 Hannover (DE); Stojko, Brane - c/o Continental AG, 30419 Hannover (DE); Bosch-Masgrau, Francesc - c/o Continental AG, 30419 Hannover (DE); Hansen, Carsten - c/o Continental AG, 30419 Hannover (DE); Oman, Simon - c/o, 30419 Hannover (DE); Duman, Güray - c/o Continental AG, 30419 Hannover (DE); Hornyak, Laszlo - c/o Continental AG, 30419 Hannover (DE); Szlavik, Tamas - c/o Continental AG, 30419 Hannover (DE)
(74) Representative: Continental Corporation

(57) **Abstract**

Air spring having an air spring rolling bellows of elastomer material, wherein the air spring is clamped in between a sprung and unsprung mass, and the rolling bellows has at a first bellows end an air spring piston which is pot-shaped or tubular with walls which extend in the longitudinal direction of the rolling bellows and on which the rolling bellows rolls in operation with the formation of a rolling fold, wherein, starting from the first bellows end, the air spring piston extends axially over a partial length of the rolling bellows in the direction of the second bellows end and is designed as a sleeve which outwardly encloses the rolling bellows over the partial length, the part of the rolling bellows that extends beyond the partial length rolling on the outer surface of said sleeve in operation with the formation of the rolling fold.

## Description

### Air spring

The invention relates to an air spring having a rolling bellows of elastomer material, wherein the air spring is clamped in between a sprung and unsprung mass, and the rolling bellows has at a first bellows end an air spring piston which is pot-shaped or tubular with walls which extend in the longitudinal direction of the rolling bellows and on which the rolling bellows rolls in operation with the formation of a rolling fold.

### Prior art

The use of air springs in vehicles is nowadays customary for reasons of the ride comfort and of the adjustable large travel stroke and is in particular the norm in the case of buses and lorries. Acceptance has finally been gained here of rolling bellows/tubular rolling bellows which have multilayer and possibly reinforced walls of elastomer materials and which are fixedly connected or clamped at their ends to connection parts made of metal or
plastic. These are customarily, on the one hand, an air spring cover and, on the other hand, an air spring piston on which the air spring bellows can roll in operation, that is to say during compression and extension, with the formation of a rolling fold.

The air spring cover is as a rule connected to the vehicle body, that is to say the sprung mass, whereas the air spring piston is fastened to the chassis, that is to say to the unsprung mass. The air springs are connected to an air supply, customarily by means of hoses and/or air lines which, via corresponding connections and valves for air delivery and control on the air spring cover, are connected to the working space or pressure space within the air spring bellows. The air is supplied by way of a pressure accumulator located in the vehicle, which is filled by means of a compressor and then provides the supply of air for the individual sprung systems by way of a controller. The air-spring controller is often incorporated in the rest of the vehicle control system.

The connection parts and the air spring bellows thus enclose the working space which is under internal pressure and contains the air spring volume and which is connected to the air connection provided in the cover.

US 6,386,524 B1 discloses an air spring in which the customarily present construction of the connection between the air spring bellows and the connection parts becomes clear. Whereas the connection to the air spring cover occurs by crimping or flanging a bead ring formed at the upper end of the air spring bellows and having an inserted core wire, the connection to the rolling piston, which is here formed from plastic, is provided such that the lower end of the air spring bellows, which is provided with a further bead ring, is pushed or pressed merely with a fit onto a seat, which is complementary thereto, of the piston.

The connection shown there between the air spring bellows and piston disadvantageously requires complicated precisely tailored machining of the sealing surfaces and of the connection cross section on the piston and, on the other hand, is not secure during lifting of the vehicle since the piston can be pulled off the air spring bellows.

### Problem addressed by the invention

The problem addressed by the present invention accordingly consisted in the provision of an air spring of simplified construction having a rolling piston, in which air spring in particular the connection between the rolling bellows and rolling piston is to be produced in a simple manner and without a large number of additional machining operations, in which air spring tightly toleranced fits in the connection region can be dispensed with, and in which air spring a secure connection between the air spring bellows and air spring piston/rolling piston is present.

### Solution to the problem

This problem is solved by the features of the main claim. Further advantageous embodiments are disclosed in the dependent claims.

Here, starting from the first bellows end, the air spring piston extends over a partial length of the rolling bellows axially in the direction of the second bellows end and is designed as a sleeve which outwardly encloses the rolling bellows over the partial length. On the outer surface of the sleeve, the remaining part of the rolling bellows that extends beyond the partial length/sleeve length then rolls in operation with the formation of the rolling fold.

Such a design as a sleeve provides a sealing surface between the air spring bellows and air spring piston that is substantially increased by comparison with the prior art and in which there is no need at all for a particular machining operation. A sealing action which was only complicated to realize with the connection possibilities known hitherto can already be achieved solely by virtue of the formation of the inside diameter of the sleeve and of the outside diameter of the air spring in the connection region. A further advantage consists in the fact that the air spring bellows and air spring piston can be delivered to their place of installation while being connected to one another ready to install, with the result that they can be inserted into the chassis without further assembly steps for their connection to one another and have only to be correspondingly fastened to the connection parts.

An advantageous development in the context of a ready-to-install provision of an air spring consists in the fact that the rolling bellows is designed as a tubular rolling bellows and, as customary hitherto, is closed by an air spring cover at its second bellows end situated opposite to the air spring piston. Consequently, the air spring cover can be connected in the customary manner, after which the air spring with cover and piston can be installed and fastened to the connection parts.

An advantageous development consists in the fact that the air spring piston designed as a sleeve is fastened, namely preferably vulcanized, on the outer circumference of the rolling bellows. Specifically, vulcanizing on the tubular or pot-shaped rolling bellows can then take place during the very production of the air spring bellows, namely when fabrication thereof has advanced to such a stage that the vulcanization is intended to occur. In this respect, only one further and simple-to-integrate production step is thus required during the production, that is to say the fabrication, of the air spring bellows in order to provide the air spring together with rolling piston/air spring piston.

The rolling piston then runs with the bellows through the vulcanization unit and is subsequently fixedly connected to the air spring bellows in a completely air-tight manner.

A further advantageous embodiment consists in the fact that the air spring piston/rolling piston designed as a sleeve is fixed to the outer circumference of the rolling bellows by an adhesive bond. Such a type of fixing makes it possible to connect the air spring to the air spring piston/rolling piston only after vulcanization and thus produce a subassembly, this possibly affording advantages where appropriate in terms of the stock-keeping and logistics which are to be adapted in each case.

A further advantageous embodiment consists in the fact that the air spring piston designed as a sleeve has a profile of its outer surface that deviates from a cylindrical shape, preferably a conical or else concave or convex outer shape. It is possible in a very simple manner with such an embodiment to influence the stiffness behaviour of the air spring over certain rolling regions by changing the theoretical load-bearing diameter of the air spring.

A further advantageous embodiment consists in the fact that the air spring piston designed as a sleeve consists of a plurality of annular segments which are arranged axially in the form of a stack and are connected to one another. This results in a simple possibility of a length change/length adaptation of the air spring piston depending on the application and installation dimensions. As a result, adaptation to the respective use can occur by means of simple base elements or base segments.

A further advantageous embodiment consists in the fact that the segments are connected to one another by a snap or latching connection and are fixed in the axial direction. Snap or latching connections are very simple connection elements which could be produced in extremely simple forms, for example in the form of latching-in tongue and groove systems, for instance as dovetail connections.

A further advantageous embodiment, because it is simple to produce, consists in the fact that the segments are connected to one another in an integrally bonded manner and are fixed in the axial direction, preferably by adhesive bonding, welding or friction welding.

A further advantageous embodiment consists in the fact that at least one of the segments has a profile of its outer surface that deviates from a cylindrical shape, preferably a concave or convex outer shape. It is also possible in this way, as in the configuration of the piston outer surface already mentioned above, to effect a simple adaptation of the stiffness behaviour of the air spring.

A further advantageous embodiment consists in the fact that the rolling piston or its components consists/consist at least partially of metal. Particularly suitable here is a light metal so as, in combination with little weight, to provide a correspondingly stable design of the air spring piston and thereby achieve a high load-bearing capacity of the air spring.

A further advantageous embodiment consists in the fact that the rolling piston or its components consists/consist at least partially of plastic, preferably of a plastics material provided with reinforcing elements. A lightweight design is also assisted thereby. The connection to the air spring bellows can then occur, for some plastics, by adhesive bonding and, for others, by all means also by way of vulcanization or welding.

A further advantageous embodiment consists in the fact that the rolling piston or its components consists/consist of a sandwich or composite material. This makes it possible to achieve exact adaptation of the piston load-bearing capacity to the respective intended use and at the same time to achieve a material arrangement on the inner side of the rolling piston that is designed for the intended type of connection to the air spring bellows.

### Exemplary embodiment / Detailed description of the invention

The invention will be explained in more detail with reference to an exemplary embodiment. In the drawings:
- Fig. 1: shows an air spring according to the invention for a lorry in the extended state, in cross section,
- Fig. 2: shows the air spring as shown in Fig. 1 in the operating state, in cross section,
- Fig. 3: shows the air spring according to the invention as shown in Fig. 1 in an outside view in the extended state and in the operating state,
- Fig. 4: shows an air spring piston, consisting of a plurality of annular segments, of an air spring according to the invention in a first embodiment,
- Fig. 5: shows an air spring piston, consisting of a plurality of annular segments, of an air spring according to the invention in a second embodiment,
- Fig. 6: shows an enlarged illustration of the latching connection, designed as a tongue and groove connection, of the segment pistons as shown in Fig. 4 or 5,
- Fig. 7: shows an air spring from the prior art for comparison.

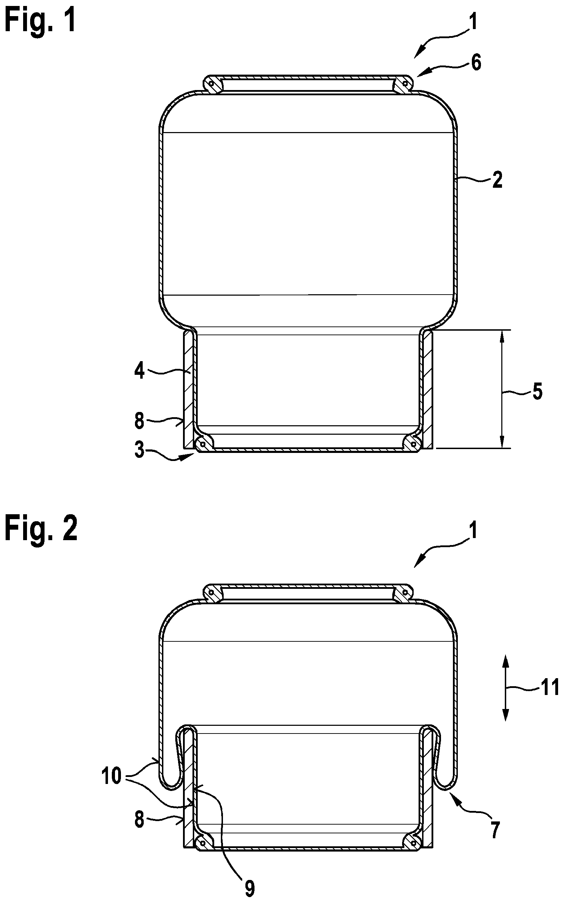

Fig. 1 shows an air spring 1 according to the invention for a lorry having a rolling bellows 2 of elastomer material in the extended state, in cross section. The air spring is customarily clamped in between a sprung and unsprung mass, namely between the body of the lorry and the associated chassis. Sprung and unsprung masses, that is to say the body and chassis, are not illustrated in more detail here in order to keep the exemplary embodiment as clear as possible and to illustrate essential features of the invention.

The rolling bellows 2 designed as a tubular rolling bellows has at its lower bellows end 3 an air spring piston 4 which is tubular with walls which extend in the longitudinal direction of the rolling bellows, wherein, starting from a first, here lower, bellows end 3, the air spring piston 4 extends axially over a partial length 5 of the rolling bellows 2 in the direction of the second bellows end 6.

This partial length 5 thus corresponds to the height of the rolling piston or air spring piston 4. Here, the air spring piston 4 is designed as a sleeve which outwardly encloses the rolling bellows over the partial length 5 or over its entire height. The outside diameter of the rolling bellows/tubular rolling bellows or of the blank and the inside diameter of the rolling piston 4 or of the sleeve are designed here in such a way that greater or lesser pressing between the opposite surfaces occurs. The design depends on whether the air spring piston designed as an enclosing sleeve is vulcanized on, applied by adhesive bonding or fastened in some other way.

In the case of the embodiment according to the invention shown here of the air spring, the air spring piston 4 designed as an enclosing sleeve is vulcanized on the rolling bellows 2.

During compression and extension in the operation of the air spring 1, here represented by the movement arrow 11, the upper part of the rolling bellows 2 that extends beyond the partial length 5 or height of the piston rolls on the outer surface 8 of the air spring piston 4 with the formation of a rolling fold 7. This operating state in which the rolling bellows forms the rolling fold 7 upon compression and extension is shown by Fig. 2, this likewise in cross section.

The tubular air spring piston 4, which as a sleeve encloses the rolling bellows 2, is vulcanized on the outer circumference of the rolling bellows and is thus connected air-tight to the lower part of the outer surface 10 of the rolling bellows over its entire inner surface 9 over the partial length 5.

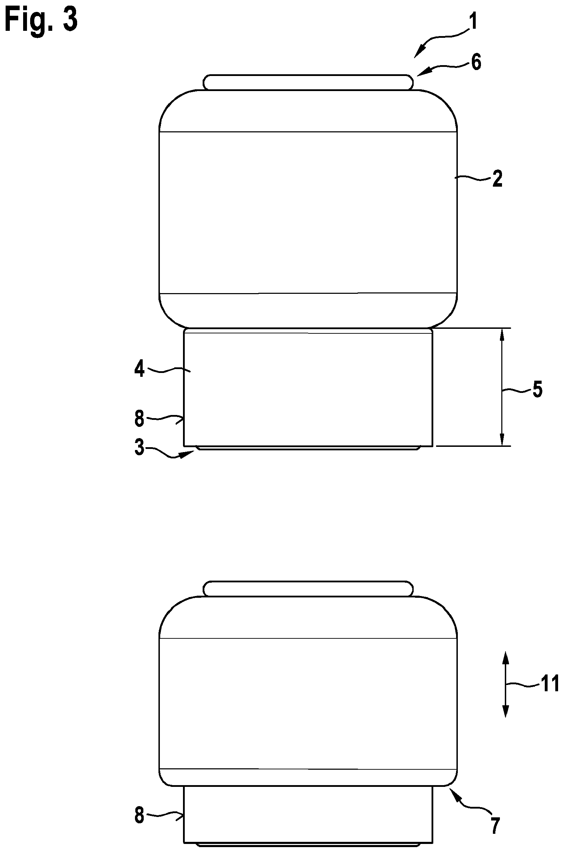

By contrast to the sectional illustrations of Figs. 1 and 2, Fig. 3 shows outside views of the air spring 1, namely, in the upper part, a view of the air spring 1 from outside in the extended state, and, in the lower part, the same view in the operating state upon compression or extension. It also becomes clear here that, as seen from outside, the air spring according to the invention has virtually the same appearance as a conventional air spring in the prior art. However, it thus also becomes clear that exchanging conventional air springs for the air spring according to the invention is readily possible, which of course represents a further particular advantage.

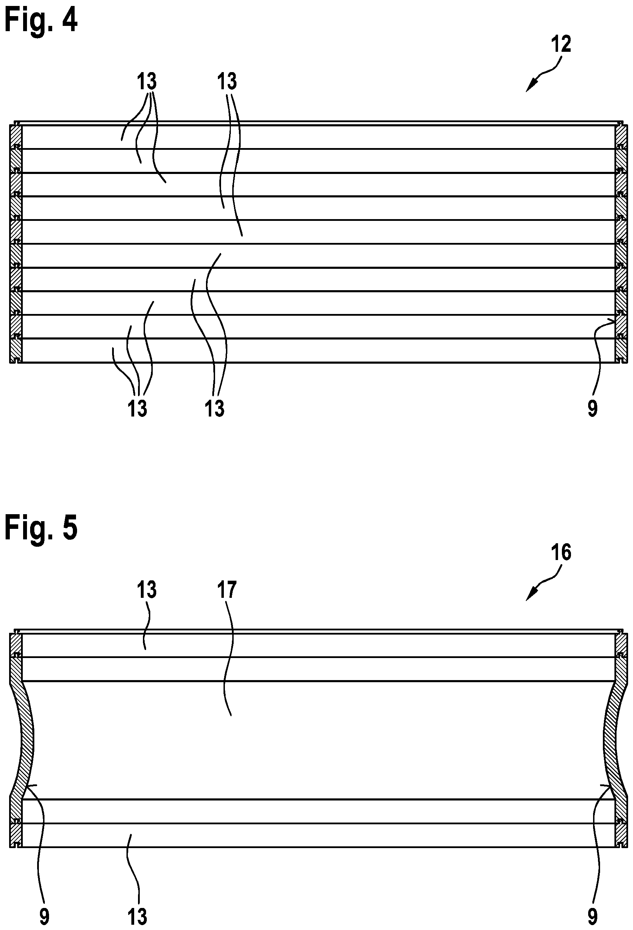

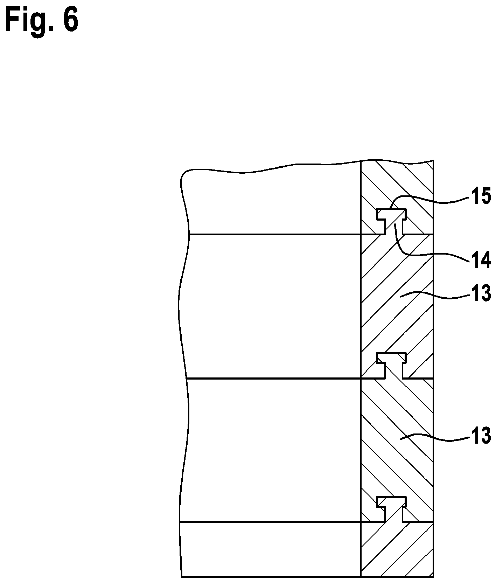

Fig. 4 shows an air spring piston 12 of an air spring according to the invention illustrated individually in cross section. The air spring piston 12 illustrated here consists of a plurality of annular segments 13 which are arranged axially in the form of a stack and are connected to one another by means of a latching connection and are fixed in the axial direction. When viewing Figs. 4 and 6 together, it is clearly evident that the latching connection is designed here as a tongue and groove connection resembling a dovetail-shaped profile in which correspondingly formed tongues 14 are latched into grooves 15 formed in a complementary manner thereto.

As already illustrated above, it is thus possible here by means of simple base segments to adapt the piston height to the respective use or installation space.

Fig. 5 shows a further embodiment of an air spring piston 16 of an air spring according to the invention illustrated individually in cross section. The air spring piston 16 consists here of a plurality of different annular segments which are arranged axially in the form of a stack, namely consisting on the one hand of two simple annular segments 13 and on the other hand of a segment 17 formed with a concave outer surface. The segments 13 and 17 are also connected to one another by means of the already described latching connection, as is illustrated in principle in Figure 6.

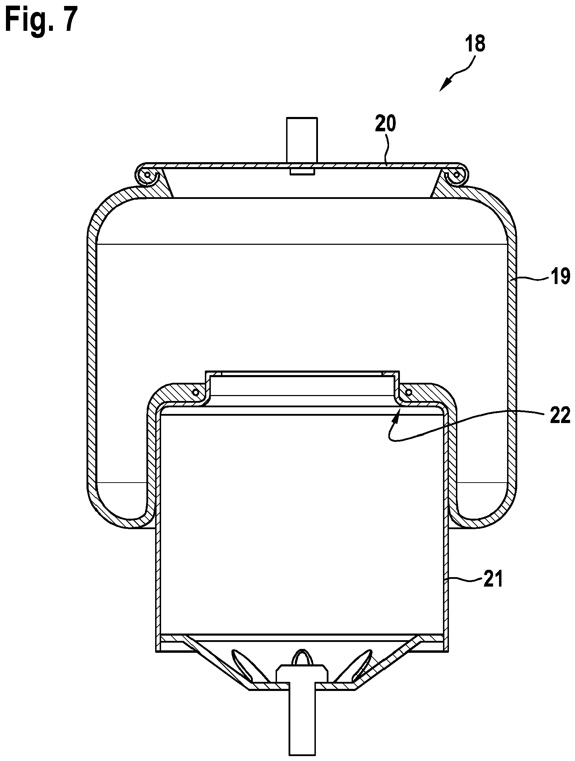

Fig. 7 shows, for comparison, an air spring 18 in cross section, as is customary in the prior art. The air spring 18 consists substantially of an air spring bellows 19 which is connected to a cover 20 fastened at its upper end and to an air spring piston or rolling piston 21 fastened at its lower end. Whereas the connection to the air spring cover occurs by flanging a bead ring formed at the upper end of the air spring bellows and having an inserted core wire, the connection to the rolling piston 21 is provided such that the lower end of the air spring bellows, which is provided with a further bead ring, is pushed merely with a fit onto a rolling bellows seat 22, which is complementary thereto, of the piston 21.

### List of reference signs

### (Part of the description)

- 1: Air spring
- 2: Rolling bellows, air spring rolling bellows, tubular rolling bellows
- 3: Lower bellows end of the rolling bellows, first bellows end
- 4: Air spring piston
- 5: Partial length of the rolling bellows, height of the piston designed as a sleeve
- 6: Upper, second bellows end
- 7: Rolling fold
- 8: Outer surface of the sleeve or of the air spring piston 4
- 9: Inner surface of the air spring piston 4
- 10: Outer surface of the rolling bellows 2
- 11: Spring movement during compression and extension in operation
- 12: Air spring piston consisting of individual segments
- 13: Annular segment
- 14: Tongue of the tongue and groove connection
- 15: Groove of the tongue and groove connection
- 16: Air spring piston consisting of individual segments
- 17: Segment with concave outer surface
- 18: Air spring (prior art)
- 19: Air spring bellows (prior art)
- 20: Air spring cover (prior art)
- 21: Air spring piston / rolling piston (prior art)
- 22: Rolling bellows seat on the piston (prior art)

## Claims

1. Air spring (1) having an air spring rolling bellows (2) of elastomer material, wherein the air spring is clamped in between a sprung and unsprung mass, and the rolling bellows (2) has at a first bellows end (3) an air spring piston (4) which is pot-shaped or tubular with walls which extend in the longitudinal direction of the rolling bellows (2) and on which the rolling bellows (2) rolls in operation with the formation of a rolling fold (7), **characterized in that**, starting from the first bellows end (3), the air spring piston (4) extends axially over a partial length (5) of the rolling bellows in the direction of the second bellows end (6) and is designed as a sleeve which outwardly encloses the rolling bellows (2) over the partial length (5), the part of the rolling bellows (2) that extends beyond the partial length rolling on the outer surface (8) of said sleeve in operation with the formation of the rolling fold (7).

2. Air spring according to Claim 1, in which the rolling bellows (2) is designed as a tubular rolling bellows and is closed by an air spring cover at its second bellows end (6) situated opposite to the air spring piston.

3. Air spring according to Claim 1 or 2, in which the air spring piston (4) designed as a sleeve is fastened, preferably vulcanized, on the outer circumference of the rolling bellows.

4. Air spring according to Claim 1 or 2, in which the air spring piston (4) designed as a sleeve is fixed to the outer circumference of the rolling bellows by an adhesive bond.

5. Air spring according to one of Claims 1 to 4, in which the air spring piston (4) designed as a sleeve has a profile of its outer surface (8) that deviates from a cylindrical shape, preferably a concave or convex or else conical outer shape.

6. Air spring according to one of Claims 1 to 5, in which the air spring piston (4) designed as a sleeve consists of a plurality of annular segments (13, 17) which are arranged axially in the form of a stack and are connected to one another.

7. Air spring according to Claim 6, in which the segments are connected to one another by a snap or latching connection (14, 15) and are fixed in the axial direction.

8. Air spring according to Claim 6, in which the segments are connected to one another in an integrally bonded manner and are fixed in the axial direction, preferably by adhesive bonding, welding or friction welding.

9. Air spring according to one of Claims 6 to 8, in which at least one of the segments (17) has a profile of its outer surface that deviates from a cylindrical shape, preferably a concave or convex outer shape.

10. Air spring according to one or more of the preceding claims, in which the rolling piston (4) or its components (13, 17) consists/consist at least partially of metal.

11. Air spring according to one or more of Claims 1 to 9, in which the rolling piston (4) or its components (13, 17) consists/consist at least partially of plastic, preferably of a plastics material provided with reinforcing elements.

12. Air spring according to one or more of Claims 1 to 11, in which the rolling piston (4) or its components (13, 17) consists/consist of a sandwich or composite material.

13. Chassis of a car or commercial vehicle having an air spring according to one of Claims 1 to 12.
